# EUROPEAN PATENT SPECIFICATION

(11) **EP 1 028 233 B1**
(45) Date of publication and mention of the grant of the patent: **10.11.2004**
(21) Application number: 00301053.5
(22) Date of filing: 10.02.2000
(51) Int. Cl.: F01K 23/06, F02B 37/013, F02B 73/00, F02G 5/02

(54) **Combi power plant**
Kombikraftwerk
Centrale combinée

(30) Priority: 12.02.1999 FI 990277
(43) Date of publication of application: 16.08.2000
(73) Proprietor: Wärtsilä Finland Oy, 65380 Vaasa (FI)
(72) Inventor: Hägglund, Thomas, 65410 Sundom (FI)
(74) Representative: Newby, Martin John

(56) References cited:
- EP-A- 0 434 419
- FR-A- 1 072 533
- GB-A- 182 787

## Description

This invention relates to a combined cycle power plant according to preamble of claim 1. In particular the combined cycle power plant comprises at least one multi-cylinder combustion engine unit, such as a large internal combustion engine, having two adjacent sets of cylinders arranged in a line and two turbo apparatuses. The invention also relates to a method of intensifying the production of steam and/or electricity in a combined cycle power plant.

In the context of the present invention, by the expression "large internal combustion, e.g. diesel, engine" is meant such engines which may comprise, for example, main or auxiliary engines of a ship or which are suitable for production of heat and/or electricity.

The capacity of a combustion engine can be improved by means of turbo apparatus, wherein the energy of exhaust gases is utilised for compressing the inlet air of the engine. The efficiency of the invention can further be improved by intermediate cooling of the compressed air. It is known as such to compress the incoming air in at least two phases by arranging two or more turbo apparatuses one after the other. In particular the turbines of the apparatuses and the compressors of the apparatuses are successively arranged (see, for example, GB-A-2121474. The capacity is thus increased because the efficiency of the air compression is dependent on volume flow rate, which in turn is dependent on the temperature of the inlet air.

Further arrangements are shown in EP 0 434 419 A and in GB 182 787 A.

In a so called V-engine, each line of cylinders is customarily provided with a turbo apparatus of its own. Hence, the above-mentioned two phase compression leads in practise to very complicated arrangements and thereby to greater investment costs due to an increased number of components. The solution may be particularly complicated if the turbo apparatuses, and also possible intermediate coolers, are in a known manner as such partly integrated to an engine end.

It is an aim of the invention to provide a novel exhaust gas feeding and steam production arrangement for combined cycle power plants using large internal combustion engines. Preferably the invention may be applied specifically in connection with V-engines having turbo apparatus based on two-phase compression and which are of simple construction and which improve the efficiency of the plant. It is thus an intention to provide a combined cycle power plant with improved total efficiency which is suitable for intensified production of steam and/or electricity.

Objectives of the invention may be achieved in a manner presented in the ensuing claim 1.

According to one aspect of the present invention the feeding of the exhaust gases into the first exhaust gas boiler in the flow direction is accomplished so that the exhaust gases from one turbo apparatus are led directly into a first exhaust gas boiler of the exhaust gas boiler means and the exhaust gases from the other turbo apparatus are led into the first exhaust gas boiler via a separate heat exchanger. In order to maximise the temperature of the produced steam, a first steam production circuit connected to said first exhaust gas boiler is led via the first exhaust gas boiler into said heat exchanger before being fed into a steam turbine. In this manner the temperature of the steam fed into the steam turbine is made as high as possible, which improves the capacity of the steam turbine and therefore the total efficiency of the whole plant. This is based on a realisation that the temperature of the exhaust gases from turbo apparatuses may differ from each other in an arrangement utilising two-phase compressing according to the invention. The separate heat exchanger may favourably be connected after the turbine from which gases of likely higher temperature are coming out. This may be effected by regulation so that the right turbine is selected.

In order to further improve the effect, the arrangement may comprise a second exhaust gas boiler after said first exhaust gas boiler in the flow direction, into which another steam production circuit is connected, which is operatively connected to said first steam production circuit. Additionally, steam from said second steam production circuit may also be fed directly into said steam turbine.

By intermediate cooling it is possible to improve the efficiency of the compressors. In particular, prior to feeding the compressed air into the cylinders, the air may be passed through intermediate cooling means. Additionally, between the first and the second compressor favourably an intermediate cooling may be arranged for compressed air. By the solution according to the invention it is also possible to decrease the amount of energy which is removed at the intermediate cooling stage of the compressed air. A part of that energy may be utilised as mechanical energy obtained from the engine and a part may also be obtained by increasing the temperature of the exhaust gases. This increased temperature of the exhaust gases may be utilised by recovering heat energy from exhaust gases for steam production and/or further for production of electricity in a combined cycle power plant for improving its total efficiency.

According to another aspect of the present invention there is provided a method of intensifying the production of steam and/or electricity in a combined cycle power plant, the method being as claimed in the ensuing claim 6.

Embodiments of the invention will now be described, by way of example only, with particular reference to the accompanying drawings, in which:
Fig. 1 shows schematically an internal combustion engine of a combined cycle power plant according to the invention which is provided with two turbo apparatuses; and
Fig. 2 shows schematically a combined cycle power plant according to the invention including an internal combustion engine.

In the drawings reference numeral 1 designates a large internal combustion engine unit, specifically a V-engine, which comprises two adjacent sets of cylinders 1a and 1b each arranged in line. The exhaust gases of the set of cylinders 1a are led through an exhaust pipe 2a into a turbine 3a of a first turbo apparatus 3 and the exhaust gases of the set of cylinders 1b are correspondingly led through an exhaust pipe 2b into a turbine 4a of a second turbo apparatus 4.

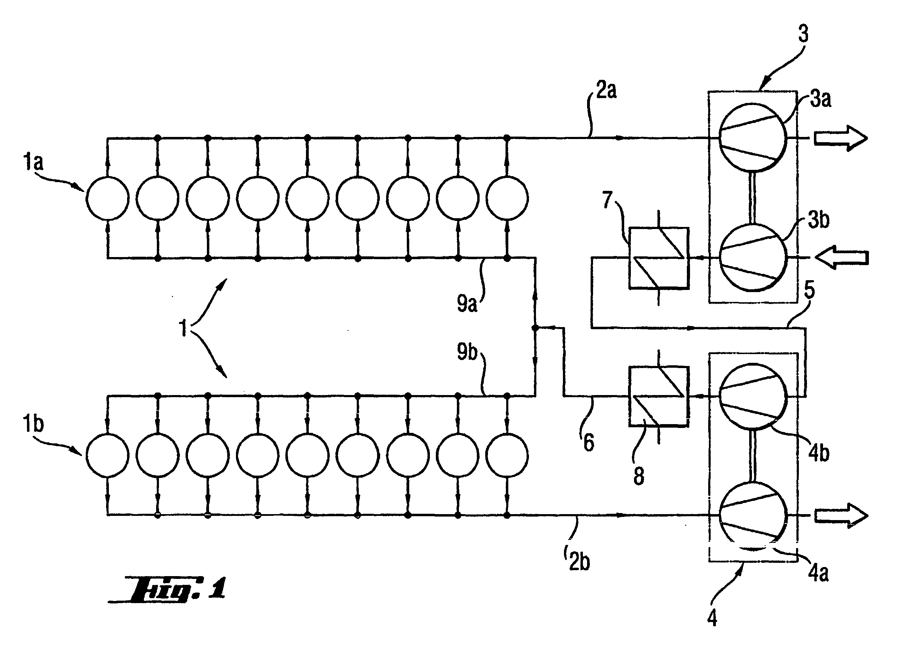

With reference to Figure 1, compressors 3b and 4b of the turbo apparatuses 3 and 4 are connected to each other successively or in series so that compressed air for feeding into all the cylinders of the engine is first led into the compressor 3b and from there through a connection 5 into the compressor 4b, from which it is further led through a connection 6 into inlet or suction pipe units 9a and 9b of the cylinders. The arrangement further comprises intermediate coolers 7 and 8. By compressing the compressed air in two phases as provided hereby, together with the provision of intermediate cooling, the efficiency of the engine can be improved and at the same time the hardware configuration may be kept more simple than in conventional two-phase arrangements.

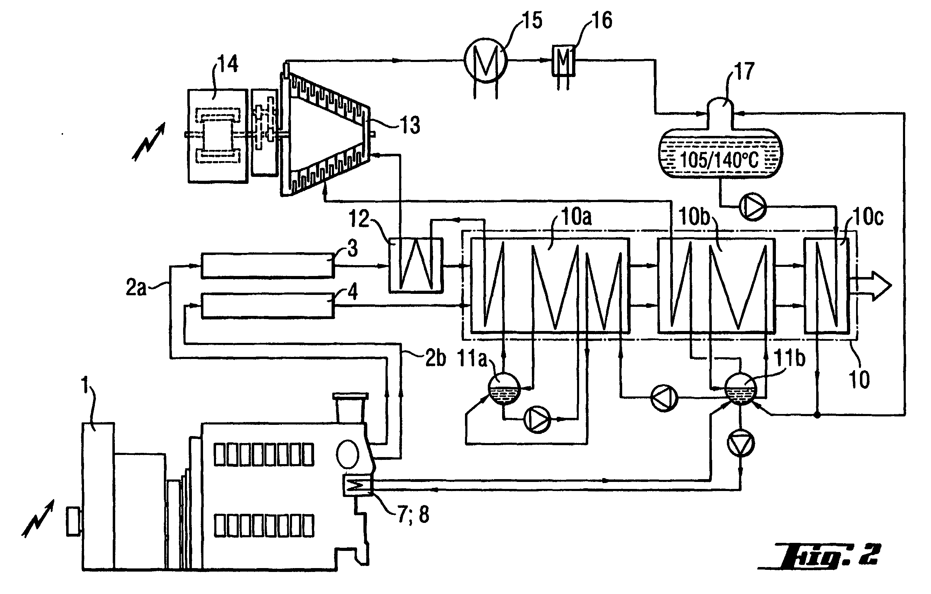

In the combined cycle power plant application of Figure 2, the engine arrangement according to Figure 1 is utilised for more intense production of steam and/or electricity. The exhaust gases of a large V-diesel engine 1 are led through turbo apparatuses 3 and 4 as described above into an exhaust gas boiler unit 10. In the arrangement shown the boiler unit 10 comprises three successive exhaust gas boilers 10a, 10b and 10c. Of these, the exhaust gas boilers 10a and 10b are provided with steam generating means 11a and 11b, respectively. The arrangement also comprises a steam turbine 13, to which an electric generator 14, a condenser 15, a heat exchanger 16, which may be utilised for its part for cooling of the engine, and a feed water tank 17 are attached.

When the compressors 3b and 4b (not shown in Figure 2) are connected to each other in accordance with Figure 1, the optimum amount of energy available for compressing the inlet air by means of the turbines 3a and 4a of the turbo apparatuses 3 and 4 is not necessarily evenly distributed between the turbo apparatuses, as a result of which the temperatures of the exhaust gases coming out differ correspondingly from each other. This fact may with advantage be made use of so that the steam generated by the steam generator 11a is led after the exhaust gas boiler into a heat exchanger 12 before being fed into the steam turbine 13. Thus, the higher temperature exhaust gases finally superheat the steam just before the steam is fed into the steam turbine, whereby the temperature of the steam can be correspondingly increased in comparison with a situation where the steam would be heated with the exhaust gases coming out from the turbo apparatuses and representing average temperature thereof. Thus the efficiency of the steam production, and at the same time with the arrangement of Figure 1, the total efficiency of an entire combined cycle power plant may essentially be improved.

The hardware configurations disclosed in the drawings may naturally be implemented in many alternative ways especially depending on whether the main interest lies with steam production or with the production of electricity. The most preferred application of the invention is for V-engines, but the invention may in principle also be applied also to engine arrangements of other kinds. Thus, the invention is not restricted to the embodiments shown, but several modifications are feasible within the scope of the attached claims.

## Claims

1. A combined cycle power plant comprising at least one multi-cylinder combustion engine unit, the exhaust gases of which are arranged to be supplied to exhaust gas boiler means (10), and the heat energy of the exhaust gases being recovered for production of steam and/or electricity, the combustion engine unit comprising two adjacent sets (1a, 1b) of cylinders each arranged in a line and each having a separate turbo apparatus (3, 4) associated therewith through which the exhaust gases from the associated set of cylinders (1a, 1b) are passed, compressors (3b,4b) of the turbo apparatuses being coupled together successively so that the compressed air for each of the sets of cylinders (1a, 1b) of the engine unit is led via the compressor (3b) of the first turbo apparatus to the compressor (4b) of the second turbo apparatus and thereafter to the cylinders, **characterised in that** the plant has means for conveying the exhaust gases from one of said turbo apparatuses (4) directly to a first exhaust gas boiler (10a) of the exhaust gas boiler means (10), means for conveying the exhaust gases from the other of said turbo apparatuses (3) to said first exhaust gas boiler (10a) via a separate heat exchanger (12), a first steam producing means (11a) connected to said first exhaust gas boiler (10a), and means for conveying steam generated by said first steam producing means (11a) from said exhaust gas boiler (10a) into said heat exchanger (12), in order to maximise the temperature of steam, and thereafter to a steam turbine (13).

2. A combined cycle power plant according to claim 1, **characterised in that** it comprises a second exhaust gas boiler (10b) positioned downstream of the first exhaust gas boiler (10a) in the flow direction, and a second steam producing means (11b) associated with the second exhaust gas boiler and which is operatively connected to said first steam producing means (11a).

3. A combined cycle power plant according to claim 2, **characterised in that** it comprises further means for conveying steam from said second steam producing means (11b) directly into said steam turbine (13).

4. A combined cycle power plant according to any of preceding claims, **characterised in that** at least one intermediate cooler (8) is arranged to cool the compressed air before it is fed into the cylinders.

5. A combined cycle power plant according to any of preceding claims, **characterised in that** the combustion engine unit (1) comprises a V-engine.

6. A method of intensifying the production of steam and/or electricity in a combined cycle power plant comprising at least one multi-cylinder combustion engine unit, the method comprising supplying exhaust gases from said at least one multi-cylinder combustion engine unit to exhaust gas boiler means (10), and recovering the heat energy of the exhaust gases for production of steam and/or electricity, the combustion engine unit comprising two adjacent sets (1a, 1b) of cylinders each arranged in a line and each having a separate turbo apparatus (3, 4) associated therewith through which the exhaust gases from the associated set of cylinders (1a, 1b) are passed, compressors (3b,4b) of the turbo apparatuses being coupled together successively so that the compressed air for each of the sets of cylinders (1a, 1b) of the engine unit is led via the compressor (3b) of the first turbo apparatus to the compressor (4b) of the second turbo apparatus and thereafter to the cylinders, **characterised in that** the method further comprises conveying the exhaust gases from one of said turbo apparatuses (4) directly to a first exhaust gas boiler (10a) of the exhaust gas boiler means (10), conveying the exhaust gases from the other of said turbo apparatuses (3) to said first exhaust gas boiler (10a) via a separate heat exchanger (12), and conveying steam generated by a first steam producing means (11a) associated with the first gas boiler means through said heat exchanger (12), in order to maximise the temperature of steam, and thereafter to a steam turbine (13).

## Patentansprüche

1. Kombikraftwerk, das mindestens eine Mehrfachzylinder-Brennkraftmaschineneinheit umfaßt, deren Abgase so vorgesehen sind, daß sie einem Abgaskesselmittel (10) zugeführt werden, und die Wärmeenergie der Abgase zur Erzeugung von Dampf und/oder elektrischem Strom zurückgewonnen wird, wobei die Brennkraftmaschineneinheit zwei angrenzende Sätze (1a, 1b) von Zylindern umfaßt, die jeweils in einer Reihe vorgesehen sind und jeweils eine diesen zugeordnete separate Turbovorrichtung (3, 4) haben, durch die die Abgase vom zugeordneten Zylindersatz (1a, 1b) geleitet werden, wobei Verdichter (3b, 4b) der Turbovorrichtungen hintereinander miteinander gekoppelt sind, so daß die verdichtete Luft für jeden der Zylindersätze (1a, 1b) der Kraftmaschineneinheit über den Verdichter (3b) der ersten Turbovorrichtung zum Verdichter (4b) der zweiten Turbovorrichtung und anschließend zu den Zylindern geleitet wird, **dadurch gekennzeichnet, daß** das Kraftwerk Mittel, um die Abgase von einer der Turbovorrichtungen (4) direkt zu einem ersten Abgaskessel (10a) des Abgaskesselmittels (10) zu leiten, Mittel, um die Abgase von der anderen der Turbovorrichtungen (3) über einen separaten Wärmetauscher (12) zum ersten Abgaskessel (10a) zu leiten, ein erstes dampferzeugendes Mittel (11a), das mit dem ersten Abgaskessel (10a) verbunden ist, sowie Mittel hat, um vom ersten dampferzeugenden Mittel (11a) erzeugten Dampf vom Abgaskessel (10a) in den Wärmetauscher (12), um die Dampftemperatur zu maximieren, und anschließend zu einer Dampfturbine (13) zu leiten.

2. Kombikraftwerk nach Anspruch 1, **dadurch gekennzeichnet, daß** es einen zweiten Abgaskessel (10b), der in der Strömungsrichtung hinter dem ersten Abgaskessel (10a) positioniert ist, sowie ein zweites dampferzeugendes Mittel (11b) umfaßt, das dem zweiten Abgaskessel zugeordnet und betriebswirksam mit dem ersten dampferzeugenden Mittel (11a) verbunden ist.

3. Kombikraftwerk nach Anspruch 2, **dadurch gekennzeichnet, daß** es weiterhin Mittel umfaßt, um Dampf vom zweiten dampferzeugenden Mittel (11b) direkt in die Dampfturbine (13) einzuleiten.

4. Kombikraftwerk nach einem der vorstehend aufgeführten Ansprüche, **dadurch gekennzeichnet, daß** mindestens ein Zwischenkühler (8) vorgesehen ist, um die verdichtete Luft vor ihrer Einleitung in die Zylinder zu kühlen.

5. Kombikraftwerk nach einem der vorstehend aufgeführten Ansprüche, **dadurch gekennzeichnet, daß** die Brennkraftmaschineneinheit (1) einen V-Motor umfaßt.

6. Verfahren zur Intensivierung der Erzeugung von Dampf und/oder elektrischem Strom in einem Kombikraftwerk, das mindestens eine Mehrfachzylinder-Brennkraftmaschineneinheit umfaßt, wobei das Verfahren das Zuführen von Abgasen von mindestens einer Mehrfachzylinder-Brennkraftmaschineneinheit zum Abgaskesselmittel (10) sowie die Rückgewinnung der Wärmeenergie der Abgase zur Erzeugung von Dampf und/oder elektrischem Strom umfaßt, wobei die Brennkraftmaschine zwei angrenzende Sätze (1a, 1b) von Zylindern umfaßt, die jeweils in einer Reihe vorgesehen sind und jeweils eine diesen zugeordnete separate Turbovorrichtung (3, 4) haben, durch die die Abgase vom zugeordneten Zylindersatz (1a, 1b) geleitet werden, wobei Verdichter (3b, 4b) der Turbovorrichtungen hintereinander miteinander gekoppelt sind, so daß die verdichtete Luft für jeden der Zylindersätze (1a, 1b) der Kraftmaschineneinheit über den Verdichter (3b) der ersten Turhovorrichtung zum Verdichter (4b) der zweiten Turbovorrichtung und anschließend zu den Zylindern geleitet wird, **dadurch gekennzeichnet, daß** das Verfahren weiterhin das direkte Zuleiten der Abgase von einer der Turbovorrichtungen (4) zu einem ersten Abgaskessel (10a) des Abgaskesselmittels (10), das Leiten der Abgase von der anderen der Turbovorrichtungen (3) über einen separaten Wärmetauscher (12) zum ersten Abgaskessel (10a) sowie das Leiten von Dampf, der von einem ersten dampferzeugenden Mittel (11a), das dem ersten Abgaskesselmittel zugeordnet ist, erzeugt wurde, durch den Wärmetauscher (12), um die Dampftemperatur zu maximieren, und anschließend zu einer Dampfturbine (13) umfaßt.

## Revendications

1. Centrale combinée comprenant au moins une unité de moteur à combustion à plusieurs cylindres, dont les gaz d'échappement sont disposés de façon à être alimentés à un moyen de chaudière à gaz d'échappement (10), et l'énergie thermique des gaz d'échappement récupérée pour la production de vapeur et/ou d'électricité, l'unité de moteur à combustion comprenant deux ensembles de cylindres adjacents (1a, 1b) disposés chacun en ligne et dont chacun a un appareil de turbo séparé (3, 4) qui lui est associé, à travers lequel passent les gaz d'échappement des ensembles de cylindres associés (1a, 1b), les compresseurs (3b, 4b) des appareils de turbo étant accouplés l'un à l'autre successivement de telle façon que l'air comprimé de chacun des ensembles de cylindres (1a, 1b) de l'unité de moteur est conduit par l'intermédiaire du compresseur (3b) du premier appareil de turbo au compresseur (4b) du deuxième appareil de turbo et par la suite aux cylindres, **caractérisée en ce que** la centrale est dotée d'un moyen pour convoyer les gaz d'échappement d'un desdits appareils de turbo (4) directement à une première chaudière à gaz d'échappement (10a) du moyen de chaudière à gaz d'échappement (10), d'un moyen pour convoyer les gaz d'échappement de l'autre desdits appareils de turbo (3) à ladite première chaudière à gaz d'échappement (10a) par l'intermédiaire d'un échangeur thermique séparé (12), d'un premier moyen de production de vapeur (11a) connecté à ladite première chaudière à gaz d'échappement (10a), et d'un moyen pour convoyer la vapeur générée par ledit premier moyen de production de vapeur (11a) de ladite première chaudière à gaz d'échappement (10a) audit échangeur thermique (12), afin de maximiser la température de la vapeur, avant son alimentation ultérieure à une turbine à vapeur (13).

2. Centrale combinée selon la revendication 1, **caractérisée en ce qu'**elle comprend une deuxième chaudière à gaz d'échappement (10b) positionnée en aval de la première chaudière à gaz d'échappement (10a) dans le sens de l'écoulement, et un deuxième moyen de production de vapeur (11b) associé à la deuxième chaudière à gaz d'échappement et qui est connecté en fonctionnement audit premier moyen de production de vapeur (11a).

3. Centrale combinée selon la revendication 2, **caractérisée en ce qu'**elle comprend en outre un autre moyen pour convoyer la vapeur dudit deuxième moyen de production de vapeur (11b) directement à ladite turbine à vapeur (13).

4. Centrale combinée selon l'une quelconque des revendications précédentes, **caractérisée en ce qu'**au moins un refroidisseur thermique intermédiaire (8) est agencé pour refroidir l'air comprimé avant qu'il ne soit alimenté dans les cylindres.

5. Centrale combinée selon l'une quelconque des revendications précédentes, **caractérisée en ce que** l'unité de moteur à combustion (1) comprend un moteur en V.

6. Procédé pour l'intensification de la production de vapeur et/ou d'électricité dans une centrale combinée comprenant au moins une unité de moteur à combustion à plusieurs cylindres, le procédé comprenant l'alimentation des gaz d'échappement de ladite au moins une unité de moteur à combustion à plusieurs cylindres à un moyen de chaudière à gaz d'échappement (10), et la récupération de l'énergie thermique des gaz d'échappement pour la production de vapeur et/ou d'électricité, l'unité de moteur à combustion comprenant deux ensembles de cylindres adjacents (1a, 1b) disposés chacun en ligne et dont chacun a un appareil de turbo séparé (3, 4) qui lui est associé, à travers lequel passent les gaz d'échappement des ensembles de cylindres associés (1a, 1b), les compresseurs (3b, 4b) des appareils de turbo étant accouplés l'un à l'autre successivement de telle façon que l'air comprimé de chacun des ensembles de cylindres (1a, 1b) de l'unité de moteur est conduit par l'intermédiaire du compresseur (3b) du premier appareil de turbo au compresseur (4b) du deuxième appareil de turbo et par la suite aux cylindres, **caractérisé en ce que** le procédé comprend en outre le convoyage des gaz d'échappement d'un desdits appareils de turbo (4) directement à une première chaudière à gaz d'échappement (10a) du moyen de chaudière à gaz d'échappement (10), le convoyage des gaz d'échappement de l'autre desdits appareils de turbo (3) à ladite première chaudière à gaz d'échappement (10a) par l'intermédiaire d'un échangeur thermique séparé (12), et le convoyage de la vapeur générée par un premier moyen de production de vapeur (11a) associé au premier moyen de chaudière à gaz par l'intermédiaire dudit échangeur thermique (12), afin de maximiser la température de la vapeur, avant son alimentation ultérieure à une turbine à vapeur (13).
